# EUROPÄISCHE PATENTANMELDUNG

(11) **EP 4 596 930 A1**
(43) Veröffentlichungstag der Anmeldung: **06.08.2025**
(21) Anmeldenummer: 25155656.9
(22) Anmeldetag: 03.02.2025
(51) Int. Cl.: F16K 5/04, F16K 11/085, F16K 27/06

(54) **FLUIDVERTEILUNGSANORDNUNG**

(30) Priorität: 05.02.2024 DE 102024103138
(71) Anmelder: VERITAS AG, 63571 Gelnhausen (DE)
(72) Erfinder: Hattass, Dirk, 63584 Gründau (DE)
(74) Vertreter: Patentship Patentanwaltsgesellschaft mbH

(57) **Zusammenfassung**

Die vorliegende Erfindung betrifft eine Fluidverteilungsanordnung (100), umfassend: zumindest drei Fluidführungen (107, 107-1, 107-2, 107-3, 107-4), welche ausgebildet sind, Fluid zu führen, wobei die zumindest drei Fluidführungen (107, 107-1, 107-2, 107-3, 107-4) in einem Ventilgehäuse (101) der Fluidverteilungsanordnung (100) geformt sind, ein Ventilgehäuse (101), welches einen Gehäuseinnenraum (103) begrenzt, wobei das Ventilgehäuse (101) zumindest drei Gehäuseöffnungen (105, 105-1, 105-2, 105-3, 105-4) aufweist, welche jeweils den Gehäuseinnenraum (103) mit einer Fluidführung (107, 107-1, 107-2, 107-3, 107-4) der zumindest drei Fluidführungen (107, 107-1, 107-2, 107-3, 107-4) fluidtechnisch verbinden, wobei die jeweilige Gehäuseöffnung (105, 105-1, 105-2, 105-3, 105-4) jeweils durch einen Öffnungsrand (109) des Ventilgehäuses (101) begrenzt wird, einen Ventilkolben (111), welcher drehbar in dem Gehäuseinnenraum (103) angeordnet und ausgebildet ist, die zumindest drei Gehäuseöffnungen (105, 105-1, 105-2, 105-3, 105-4) in Abhängigkeit einer Kolbenstellung des Ventilkolbens (111) zumindest teilweise fluidtechnisch zu sperren oder zumindest teilweise fluidtechnisch freizugeben, zumindest drei Dichtungsanordnungen (117, 117-1, 117-2, 117-3, 117-4), wobei jeweils eine der zumindest drei Dichtungsanordnungen (117, 117-1, 117-2, 117-3, 117-4) in jeweils einer der zumindest drei Fluidführungen (107, 107-1, 107-2, 107-3, 107-4) an jeweils einer der zumindest drei Gehäuseöffnungen (105, 105-1, 105-2, 105-3, 105-4) angeordnet ist, wobei die Dichtungsanordnungen (117, 117-1, 117-2, 117-3, 117-4) jeweils ein Befestigungselement (119) und ein Dichtungselement (121) aufweisen, wobei das jeweilige Befestigungselement (119) an einer Innenwand (123) der jeweiligen Fluidführung (107, 107-1, 107-2, 107-3, 107-4) anliegt und ausgebildet ist, das jeweilige Dichtungselement (121) mit einer Kraft zu beaufschlagen, um das jeweilige Dichtungselement (121) an den jeweiligen Öffnungsrand (109) des Ventilgehäuses (101) zu pressen und eine fluidtechnische Abdichtung zwischen dem Ventilkolben (111) und dem jeweiligen Öffnungsrand (109) zu bewirken.

## Beschreibung

Die vorliegende Erfindung betrifft eine Fluidverteilungsanordnung.

In herkömmlichen Batteriekühlungssystemen von elektrisch angetriebenen Fahrzeugen werden die Batteriezellen mittels thermisch gekoppelter Fluidleitungen temperiert, durch welche ein Wasser-Glykol-Gemisch zirkuliert wird. Um die Führung des Fluids durch entsprechende Fluidleitungen zu steuern, werden Fluidverteilungsanordnungen verwendet, in welchen Fluidventile zur Schaltung der Strömungswege vorhanden sind, um je nach Temperierungsbedarf das Wasser-Glykol-Gemisch zu einem bestimmten Bereich der zu temperierenden Batteriezellen zu leiten.

Herkömmliche Fluidventile in herkömmlichen Fluidverteilungsanordnungen sind jedoch in der Regel auf die Verwendung eines Wasser-Glykol-Gemisches in einem indirekten Kühlungssystem ausgelegt, und nicht auf eine entsprechende direkte Kühlung in einem Immersionskühlungssystem, welches beispielsweise bisher lediglich für eine besonders wirksame Prozessorkühlung in einem Computer bekannt ist, und in welchem andere Kühlmittel wie beispielsweise dielektrische Öle verwendet werden. Für die Verwendung eines Immersionskühlungssystems zur Temperierung von Batteriezellen in einem elektrisch angetriebenen Fahrzeug können herkömmliche Fluidverteilungsanordnungen nicht verwendet werden, da vollkommen unterschiedliche Leitungsquerschnitte und Eigenschaften der Ventilschaltung notwendig sind.

In der Druckschrift DE 10 2021 108 799.6 A1 ist lediglich ein Fluidventil in einer Fluidführung von herkömmlichen Wasser-Glykol-Gemischen beschrieben.

Es ist die der Erfindung zugrundeliegende Aufgabe, eine Fluidverteilungsanordnung anzugeben, welche in einem Immersionskühlsystem verwendet werden kann.

Diese Aufgabe wird durch die Gegenstände mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch eine Fluidverteilungsanordnung gelöst, umfassend: zumindest drei Fluidführungen welche ausgebildet sind, Fluid zu führen, wobei die zumindest drei Fluidführungen in einem Ventilgehäuse der Fluidverteilungsanordnung geformt sind, das Ventilgehäuse, welches einen Gehäuseinnenraum begrenzt, wobei das Ventilgehäuse zumindest drei Gehäuseöffnungen aufweist, welche jeweils den Gehäuseinnenraum mit einer Fluidführung der zumindest drei Fluidführungen fluidtechnisch verbinden, wobei die jeweilige Gehäuseöffnung jeweils durch einen Öffnungsrand des Ventilgehäuses begrenzt wird, einen Ventilkolben, welcher drehbar in dem Gehäuseinnenraum angeordnet und ausgebildet ist, die zumindest drei Gehäuseöffnungen in Abhängigkeit einer Kolbenstellung des Ventilkolbens zumindest teilweise fluidtechnisch zu sperren oder zumindest teilweise fluidtechnisch freizugeben, zumindest drei Dichtungsanordnungen, wobei jeweils eine der zumindest drei Dichtungsanordnungen in jeweils einer der zumindest drei Fluidführungen an jeweils einer der zumindest drei Gehäuseöffnungen angeordnet ist, wobei die Dichtungsanordnungen jeweils ein Befestigungselement und ein Dichtungselement aufweisen, wobei das jeweilige Befestigungselement an einer Innenwand der jeweiligen Fluidführung anliegt und ausgebildet ist, das jeweilige Dichtungselement mit einer Kraft zu beaufschlagen, um das jeweilige Dichtungselement an den jeweiligen Öffnungsrand des Ventilgehäuses zu pressen und eine fluidtechnische Abdichtung zwischen dem Ventilkolben und dem jeweiligen Öffnungsrand zu bewirken.

Insbesondere ist die Fluidverteilungsanordnung gemäß dem Aspekt als eine Fahrzeugfluidverteilungsanordnung ausgebildet. Die Fahrzeugfluidverteilungsanordnung ist eine Anordnung, welche ausgebildet ist, Fluid in einem Fahrzeug, insbesondere in einem elektrisch angetriebenen Fahrzeug, zu verteilen. Insbesondere ist die Fahrzeugfluidverteilungsanordnung als eine Batteriekühlungsfluidverteilungsanordnung ausgebildet, welche ausgebildet, Batteriekühlungsfluid, insbesondere ein dielektrisches Öl, in einem Fahrzeug, insbesondere in einem elektrisch angetriebenen Fahrzeug, zu verteilen.

Insbesondere sind die Fluidführungen als Fluidführungskanäle ausgebildet.

Dadurch wird beispielsweise der technische Vorteil erreicht, dass die Dichtungsanordnung durch das Befestigungselement an dem entsprechenden Öffnungsrand der jeweiligen Gehäuseöffnung wirksam befestigt werden kann, und dass das an der Innenwand der jeweiligen Fluidführung anliegende Befestigungselement die erforderliche Presskraft bereitstellt, um das Dichtungselement wirksam gegen den entsprechenden Öffnungsrand zu pressen, um auch beim vorliegenden Anwendungsfall der Immersionskühlung bei verwendeten dielektrischen Ölen eine wirksame fluidtechnische Abdichtung zwischen dem Ventilkolben und der jeweiligen Gehäuseöffnung zu erreichen.

Zudem wird der technische Vorteil erreicht, dass eine einfache Montage der Fluidverteilungsanordnung erreicht wird, da die jeweiligen Dichtungsanordnungen lediglich auf der den jeweiligen Gehäuseöffnungen abgewandten Seite in die jeweiligen Fluidführungen eingeschoben werden müssen, um die genannte wirksame Presskraft zur Abdichtung bereitzustellen.

Zudem wird der technische Vorteil erreicht, dass die Fahrzeugfluidverteilungsanordnung gemäß der vorliegenden Offenbarung nur aus wenigen Bauteilen besteht. Dies verringert die Komplexität der Fahrzeugfluidverteilungsanordnung, und spart Kosten bei den Bauteilen und bei der Montage.

Die Fahrzeugfluidverteilungsanordnung umfasst insbesondere eine Mehrwege-Fluidverteilungsanordnung, welche zumindest drei Gehäuseöffnungen, insbesondere eine Mehrzahl von Gehäuseöffnungen, insbesondere, drei, vier, fünf, sechs, sieben, acht, neun oder zehn Gehäuseöffnungen aufweist, Insbesondere beträgt die Anzahl der Gehäuseöffnungen vier.

Der Ventilkolben der Fluidverteilungsanordnung, insbesondere der Mehrwege-Fluidverteilungsanordnung, ist drehbar in dem Gehäuseinnenraum angeordnet und kann, insbesondere durch einen Elektromotor der Fluidverteilungsanordnung, in unterschiedliche Kolbenstellungen gedreht werden.

Der Ventilkolben der Fluidverteilungsanordnung weist hierbei insbesondere einen Fluidkanal auf, welcher ausgebildet ist, in Abhängigkeit der Kolbenstellung des Ventilkolbens die zumindest drei Gehäuseöffnungen zumindest teilweise fluidtechnisch zu sperren oder zumindest teilweise fluidtechnisch freizugeben.

Eine zumindest teilweise fluidtechnische Freigabe von zumindest zwei der zumindest drei Gehäuseöffnungen kann durch den Ventilkolben insbesondere dadurch erreicht werden, dass die freizugebenden zwei Gehäuseöffnungen durch den Fluidkanal des Ventilkolbens miteinander zumindest teilweise fluidtechnisch verbunden werden. Eine zumindest teilweise fluidtechnische Freigabe umfasst eine vollständige oder teilweise Freigabe der jeweiligen Gehäuseöffnungen durch den Ventilkolben, insbesondere durch den Fluidkanal des Ventilkolbens.

Ein zumindest teilweise fluidtechnisches Sperren von zumindest einer der zumindest drei Gehäuseöffnungen kann durch den Ventilkolben insbesondere dadurch erreicht werden, dass die zumindest eine Gehäuseöffnung durch den Ventilkolben fluidtechnisch verschlossen wird. Ein zumindest teilweises fluidtechnisches Sperren umfasst ein vollständiges oder teilweises Verschließen der zumindest einen Gehäuseöffnung durch den Ventilkolben.

Wenn das Ventilgehäuse jedoch mehr als drei, insbesondere vier, sechs, acht, oder zehn Gehäuseöffnungen aufweist, kann der Ventilkolben in einer Kolbenstellung des Ventilkolbens eine erste Untergruppe von jeweils zwei Gehäuseöffnungen der mehr als drei Gehäuseöffnungen zumindest teilweise fluidtechnisch sperren und eine zweite Untergruppe von jeweils zwei Gehäuseöffnungen der mehr als drei Gehäuseöffnungen zumindest teilweise fluidtechnisch freigeben, bzw. kann der Ventilkolben in einer anderen Kolbenstellung des Ventilkolbens die erste Untergruppe von jeweils zwei Gehäuseöffnungen der mehr als drei Gehäuseöffnungen zumindest teilweise fluidtechnisch freigeben und die zweite Untergruppe von jeweils zwei Gehäuseöffnungen der mehr als drei Gehäuseöffnungen zumindest teilweise fluidtechnisch sperren.

In einer vorteilhaften Ausführungsform weist die Fluidverteilungsanordnung einen Gehäusedeckel auf, welcher mit dem Ventilgehäuse fluiddicht, insbesondere stoffschlüssig verbunden ist.

Dadurch wird der technische Vorteil erreicht, dass durch das Anbringen des Gehäusedeckels auf dem Ventilgehäuse eine wirksame, fluiddichte Abdeckung des Ventilgehäuses erreicht wird. Zudem fixiert der Gehäusedeckel die in den jeweiligen Fluidführungen aufgenommenen jeweiligen Dichtungsanordnungen.

Der Gehäusedeckel dichtet insbesondere eine Gehäuseöffnung des Ventilgehäuses, in welcher der Ventilkoben aufgenommen ist, fluiddicht ab.

Insbesondere weist der Ventilkolben einen Antriebsschaft auf, welcher durch einen Kolbenantrieb, insbesondere Elektromotor, drehbar ist. Insbesondere erstreckt sich der Antriebsschaft durch die Gehäuseöffnung des Ventilgehäuses und durch eine Gehäusedeckelöffnung des Gehäusedeckels.

Insbesondere ist der Gehäusedeckel nicht lösbar, insbesondere verschweißt, an dem Ventilgehäuse befestigt.

In einer vorteilhaften Ausführungsform weisen die in dem Ventilgehäuse geformten Fluidführungen jeweils eine offene Fluidführungsoberseite auf, welche durch jeweils eine obere Fluidwandungskontur des Gehäusedeckels fluiddicht verschlossen wird.

Dadurch wird der technische Vorteil erreicht, dass durch die zweischalige Ausbildung des Ventilgehäuses und des Gehäusedeckels die jeweilige Dichtungsanordnung zuerst vorteilhaft durch die offene Fluidführungsoberseite in den jeweiligen Fluidführungen positioniert werden kann, und die jeweilige Dichtungsanordnung anschließend durch das Verschließen des Gehäusedeckels fixiert werden kann.

In einer vorteilhaften Ausführungsform sind die zumindest drei Fluidführungen einstückig in dem Ventilgehäuse geformt.

Dadurch wird der technische Vorteil erreicht, dass die einstückige Ausbildung der Fluidführungen in dem Ventilgehäuse eine stabile einteilige Ausbildung der Bauteile sicherstellt.

In einer vorteilhaften Ausführungsform weisen die zumindest drei Fluidführungen jeweils einen Dichtungsaufnahmebereich auf, welcher ausgebildet ist, die jeweilige Dichtungsanordnung aufzunehmen, wobei der jeweilige Dichtungsaufnahmebereich durch die jeweilige Gehäuseöffnung begrenzt ist, wobei der jeweilige Dichtungsaufnahmebereich durch einen Vorsprung einer Innenwand der jeweiligen Fluidführung begrenzt ist, wobei das jeweilige Dichtungselement der jeweiligen Dichtungsanordnung an der jeweiligen Gehäuseöffnung anliegt, und wobei das jeweilige Befestigungselement an dem Vorsprung anliegt.

Dadurch wird der technische Vorteil erreicht, dass der jeweilige Vorsprung der Innenwand der jeweiligen Fluidführung einen wirksamen Angriffsbereich für das jeweilige Befestigungselement bietet, um sich daran abzustützen und wirksam auf das jeweilige Dichtungselement zu pressen.

In einer vorteilhaften Ausführungsform ist das jeweilige Dichtungselement der jeweiligen Dichtungsanordnung als ein Zweikomponentenbauteil geformt, umfassend ein erstes Dichtungselementbauteil, welches an dem jeweiligen Öffnungsrand der jeweiligen Gehäuseöffnung des Ventilgehäuses anliegt, und umfassend ein zweites Dichtungselementbauteil, welches an dem jeweiligen Befestigungselement der jeweiligen Dichtungsanordnung anliegt.

Dadurch wird der technische Vorteil erreicht, dass die Materialien der beiden Dichtungselementbauteile jeweils auf den spezifischen Anwendungsfall hin optimiert werden können.

Insbesondere ist die als ein Zweikomponentenbauteil geformte Dichtungsanordnung ein Zweikomponenten-Verbundbauteil, welches dadurch charakterisiert ist, dass sich das Material des ersten Dichtungselementbauteils und das Material des zweiten Dichtungselementbauteils verbindet. Alternativ und insbesondere ist die als ein Zweikomponentenbauteil geformte Dichtungsanordnung ein Zweikomponenten-Montagebauteil, welches dadurch charakterisiert ist, dass sich das Material des ersten Dichtungselementbauteils nicht mit dem Material des zweiten Dichtungselementbauteils verbindet.

In einer vorteilhaften Ausführungsform weist das erste Dichtungselementbauteil einen elastisch verformbaren Kunststoff, insbesondere ein Elastomer, auf, und/oder weist das zweite Dichtungselementbauteil einen festen Kunststoff, insbesondere ein Thermoplast, auf.

Dadurch wird der technische Vorteil erreicht, dass ein Elastomer die für die wirksame Abdichtung an der Gehäuseöffnung notwendige Elastizität aufweist, und dass ein Thermoplast sicherstellt, dass die von dem Befestigungselement übertragene Kraft wirksam an das erste Dichtungselementbauteil weitergeleitet wird.

Insbesondere umfasst das Elastomer des ersten Dichtungselementbauteils Ethylen-AcrylatKautschuk (AEM), Polyacrylat-Kautschuk (ACM), Fluorkautschuk (FKM), Polyurethan (PUR) und Mischungen davon.

Insbesondere umfasst das Thermoplast des zweiten Dichtungselementbauteils Polyamid (PA), Polyphthalamid (PPA), Polyphenylensulfid (PPS), thermoplastisches Polyurethan (TPU) und Mischungen davon.

In einer vorteilhaften Ausführungsform ist das jeweilige Dichtungselement der jeweiligen Dichtungsanordnung als ein einstückiges, insbesondere materialeinheitliches, Bauteil geformt.

Dadurch wird der technische Vorteil erreicht, dass ein einstückiges, insbesondere materialeinheitliches, Bauteil einfach und damit kostengünstig zu fertigen ist.

In einer vorteilhaften Ausführungsform weist das jeweilige Dichtungselement der jeweiligen Dichtungsanordnung, insbesondere das erste Dichtungselementbauteil, an einer der Gehäuseöffnung des Ventilgehäuses zugewandten Seite eine umlaufende Dichtungslippe auf, welche sich von dem jeweiligen Öffnungsrand des Ventilgehäuses in die jeweilige Gehäuseöffnung erstreckt.

Dadurch wird der technische Vorteil erreicht, dass die umlaufende Dichtungslippe, welche sich von dem jeweiligen Öffnungsrand des Ventilgehäuses in die jeweilige Gehäuseöffnung erstreckt, an dem in dem Gehäuseinnenraum des Ventilgehäuses angeordneten Ventilkolben wirksam und fluiddicht anliegt, um eine wirksame fluidtechnische Abdichtung zu erreichen.

In einer vorteilhaften Ausführungsform weist das jeweilige Dichtungselement der jeweiligen Dichtungsanordnung, insbesondere das erste Dichtungselementbauteil, einen Anlegebereich auf, welcher ausgebildet ist, an einer der jeweiligen Fluidführung zugewandten Außenwandung des Ventilgehäuses anzuliegen, wobei der jeweilige Anlegebereich insbesondere einstückig mit der jeweiligen Dichtungslippe geformt ist.

Dadurch wird der technische Vorteil erreicht, dass der Anlegebereich eine wirksame Positionierung des jeweiligen Dichtungselements an der Außenwandung des Ventilgehäuses erreicht. Insbesondere ist die Kontur des Anlegebereichs hierbei an die Kontur der Außenwandung des Ventilgehäuses angepasst.

In einer vorteilhaften Ausführungsform weist das jeweilige Dichtungselement der jeweiligen Dichtungsanordnung, insbesondere das erste und zweite Dichtungselementbauteil, eine erste Dichtungsöffnung auf, welche fluchtend zu der jeweiligen Gehäuseöffnung des Ventilgehäuses angeordnet ist, und weist das jeweilige Befestigungselement der jeweiligen Dichtungsanordnung eine zweite Dichtungsöffnung auf, welche fluchtend zu der jeweiligen Gehäuseöffnung des Ventilgehäuses und der ersten Dichtungsöffnung des jeweiligen Dichtungselements angeordnet ist.

Dadurch wird der technische Vorteil erreicht, dass durch die fluchtend zueinander ausgerichteten Dichtungsöffnungen der entsprechenden Bauteile Fluid vorteilhaft zwischen dem Gehäuseinnenraum und den jeweiligen Fluidführungen ausgetauscht werden kann.

In einer vorteilhaften Ausführungsform weist das jeweilige Befestigungselement der jeweiligen Dichtungsanordnung an einer der jeweiligen Gehäuseöffnung abgewandten Seite einen zumindest abschnittsweise umlaufenden Kontaktsteg auf, welcher an der Innenwand, insbesondere dem Vorsprung der Fluidführung der jeweiligen Fluidführung, anliegt.

Dadurch wird der technische Vorteil erreicht, dass durch den zumindest abschnittsweise umlaufenden Kontaktsteg ein wirksames gleichmäßiges Anliegen des jeweiligen Befestigungselements an der entsprechenden Innenwand, insbesondere Vorsprung der Fluidführung erreicht wird.

In einer vorteilhaften Ausführungsform weist das jeweilige Befestigungselement der jeweiligen Dichtungsanordnung einen Kontaktbereich auf, welcher an dem jeweiligen Dichtungselement, insbesondere an dem zweiten Dichtungselementbauteil, der jeweiligen Dichtungsanordnung anliegt.

Dadurch wird der technische Vorteil erreicht, dass durch den Anlegebereich des jeweiligen Befestigungselements eine wirksame Kraftübertragung von der Innenwand über das jeweilige Befestigungselement auf das jeweilige Dichtungselement möglich ist.

In einer vorteilhaften Ausführungsform erstrecken sich die zumindest drei Fluidführungen der Fluidverteilungsanordnung von der jeweiligen Gehäuseöffnung des Ventilgehäuses aus in entgegengesetzte Richtungen.

Dadurch wird der technische Vorteil erreicht, dass ein gleichmäßiger Fluidstrom aus dem Gehäuseinnenraum in die Fluidführungen, bzw. aus den Fluidführungen in den Gehäuseinnenraum ermöglicht wird.

Sind insbesondere drei Fluidführungen vorhanden, dann weisen die Erstreckungsrichtungen jeweils benachbarter Fluidführungen an der jeweiligen Gehäuseöffnung einen Winkel von 120° zueinander auf.

Sind insbesondere vier Fluidführungen vorhanden, dann weisen die Erstreckungsrichtungen jeweils benachbarter Fluidführungen an der jeweiligen Gehäuseöffnung einen Winkel von 90° zueinander auf.

In einer vorteilhaften Ausführungsform sind die zumindest drei Fluidführungen der Fluidverteilungsanordnung als gebogene Fluidführungen ausgebildet, wobei sich die zumindest drei Fluidführungen von der jeweiligen Gehäuseöffnung des Ventilgehäuses in Richtung einer gemeinsamen Verteilervorderseite der Fluidverteilungsanordnung erstrecken, und wobei insbesondere an der Verteilervorderseite der Fluidverteilungsanordnung eine Mehrzahl von nebeneinander angeordneten Fluidstutzen vorhanden ist, wobei jeweils einer der Fluidstutzen zur fluidtechnischen Verbindung mit jeweils einer der Fluidführungen ausgebildet ist.

Dadurch wird der technische Vorteil erreicht, dass durch eine entsprechende Führung der Fluidführungen zu der gemeinsamen Verteilervorderseite ein fluidtechnischer Anschluss an die Fluidführungen von einer Seite aus die Einbausituation in dem entsprechenden elektrisch angetriebenen Fahrzeug deutlich verbessert.

Ausführungsbeispiele der Erfindung sind in den Zeichnungen dargestellt und werden im Folgenden näher beschrieben.

Es zeigen:
- Fig. 1: eine perspektivische Ansicht eines Ausschnittes einer Fluidverteilungsanordnung gemäß einer Ausführungsform in einer Explosionsdarstellung;
- Fig. 2: eine perspektivische Ansicht eines Ausschnittes einer Fluidverteilungsanordnung gemäß einer Ausführungsform in einer Schnittdarstellung;
- Figs. 3A, 3B: perspektivische Ansichten eines Dichtungselements und eines Befestigungselements jeweils einer Dichtungsanordnung gemäß der in Fig. 1 und Fig. 2 dargestellten Ausführungsform;
- Fig. 4: eine perspektivische Ansicht eines vergrößerten Ausschnittes der in Fig. 2 dargestellten Fluidverteilungsanordnung gemäß einer Ausführungsform in einer Schnittdarstellung;
- Fig. 5: eine perspektivische seitliche Ansicht eines Ausschnittes einer Fluidverteilungsanordnung gemäß einer Ausführungsform; und
- Fig. 6: eine perspektivische Ansicht der in Fig. 1 dargestellten Fluidverteilungsanordnung im zusammengefügten Zustand.

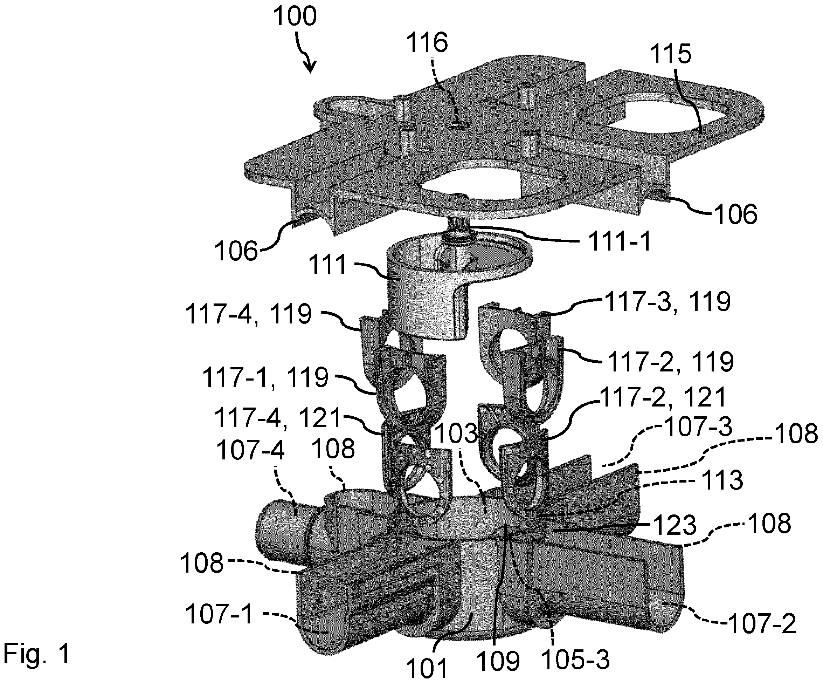

Fig. 1 zeigt eine perspektivische Ansicht eines Ausschnittes einer Fluidverteilungsanordnung gemäß einer Ausführungsform in einer Explosionsdarstellung.

Auch wenn dies in der Fig. 1 aufgrund des gewählten Ausschnittes nicht zu erkennen ist, ist die Fluidverteilungsanordnung 100 kein isoliertes Bauteil, sondern integraler Teil eines Fluidverteilungselements, insbesondere einer Fluidverteilungsplatte, mit zumindest drei, insbesondere vier, Fluidkanälen zum Führen von Fluid. Entsprechende Fluidkanäle der Fluidverteilungsanordnung 100 sind in dem Fluidverteilungselement je nach Anwendungsfall und Einbausituation teilweise in komplexen Geometrien geformt, wobei hierbei auf die nachfolgende Darstellungen verwiesen wird.

Die Fluidverteilungsanordnung 100 gemäß der vorliegenden Offenbarung dient zum Verbinden von Fluidleitungen in einer Vielzahl von fluidführenden Systemen eines Fahrzeuges. Die Fluidverteilungsanordnung 100 kann zur fluidtechnischen Verbindung von Kraftstoff-, Kühlflüssigkeits-, Ladeluft-, Bremsflüssigkeits-, Wasser-, SCR-, und/oder Getriebeölleitungen in Fahrzeugen eingesetzt werden. Insbesondere wird die Fluidverteilungsanordnung 100 in Kühlmittel-führenden Fluidleitungen, welche zur Kühlung von Batteriezellen und/oder elektrischen Antriebsmotoren in einem elektrisch angetriebenen Fahrzeug verwendet werden, eingesetzt.

In fluidführenden Systemen eines Fahrzeuges werden unterschiedliche Fluide, wie z.B. Gase oder Flüssigkeiten, teilweise unter hohem Druck und bei hohen Temperaturen geleitet. Aufgrund der beengten Bauraumsituation in einem Fahrzeug müssen verschiedene Leitungen der entsprechenden fluidführenden Systeme oftmals durch entsprechende Fluidverteilungsanordnungen 100 miteinander verbunden werden, um eine wirksame Fluidleitung zu bewirken. Hierbei werden an die fluidtechnischen Schnittstellen zwischen entsprechenden fluidführenden Leitungen entsprechend hohe Anforderungen in Bezug auf Stabilität und Fluiddichtigkeit der Fluidverteilungsanordnung 100 gestellt.

In neuesten Fahrzeuggenerationen von Batteriekühlungssystemen soll zukünftig die Kühlung des elektrischen Antriebsmotors und/oder die Kühlung der Batteriezellen anstatt mit den bisher üblichen indirekten Plattenkühlungssystemen unter Verwendung eines Wasser-Glykol-Gemisches, mittels einer direkten Immersionskühlung durch Verwendung eines dielektrischen Öls gekühlt werden. Der Vorteil einer entsprechenden Immersionskühlung ist eine effektivere und gleichmäßigere Kühlung direkt an der Wärmequelle, wie beispielsweise den Batteriezellen.

Dadurch kann eine schnellere Ladezeit und eine verlängerte Lebenszeit der Batteriezellen erreicht werden. Zusätzlich ermöglicht eine Immersionskühlung systembedingt ein zusätzliches Sicherheitspotential beim Auftreten eines Brandes aufgrund einer defekten oder zerstörten Batteriezelle. Allerdings ist bei einer entsprechenden Immersionskühlung unter Verwendung eines entsprechenden Öls gegenüber den bisherigen Fluidverteilungselementen mit Kühlwasserventilen ein erhöhter Massendurchsatz des Fluids erforderlich.

Um hierbei entsprechende Strömungsverluste zu verhindern, sind aus diesem Grund größere Leitungsquerschnitte der Fluidkanäle notwendig, welche größer als 25 mm sein können. Zudem müssen bei einer entsprechenden Immersionskühlung die Ölströme gelenkt werden, was erfindungsgemäß mittels eines Stell- oder Umlenkventils erfolgt, in dem mittels eines anzudichtenden Ventilkörpers die entsprechenden Ölströme wirksam umgelenkt werden. Zudem muss ein entsprechendes Fluidventil in diesem besonderen Fall in das Fluidverteilungselement, insbesondere die Fluidverteilungsplatte, zu integrieren.

Aufgrund der entsprechenden größeren Leitungsquerschnitte der Fluidkanäle, der entsprechenden Umlenkung der Ölströme, sowie der Verwendung eines neuartigen Öls als Kühlmittel stellt die vorliegende Erfindung einen neuen Ansatz eines geeigneten Montage- und kosteneffektiven Dichtungskonzeptes bereit.

Die Fluidverteilungsanordnung 100 gemäß dem in Fig. 1 dargestellten Ausführungsbeispiel der vorliegenden Erfindung umfasst ein Ventilgehäuse 101, welches einen Gehäuseinnenraum 103 begrenzt, wobei das Ventilgehäuse 101 zumindest drei, insbesondere vier Gehäuseöffnungen 105, 105-1, 105-2, 105-3, 105-4 aufweist. Die Gehäuseöffnungen 105, 105-1, 105-2, 105-3, 105-4 verbinden den Gehäuseinnenraum 103 mit jeweils einer Fluidführung 107, 107-1, 107-2, 107-3, 107-4, insbesondere Fluidkanal, der Fluidverteilungsanordnung 100 fluidtechnisch.

Die Fluidführungen 107, 107-1, 107-2, 107-3, 107-4 sind einstückig mit dem Ventilgehäuse 101 ausgebildet.

Es wird betont, dass aus darstellungstechnischen Gründen in der Fig. 1 nur die dritte Gehäuseöffnung 105-3 mit einem Bezugszeichen markiert ist. Ferner wird betont, dass die erste bis dritte Fluidführung 107-1, 107-2, 107-3, wie bereits erwähnt, sich durch das Fluidverteilungselement, bzw. die Fluidverteilungsplatte erstrecken, und somit nicht außerhalb der in Fig. 1 dargestellten Zeichenebene enden.

Die jeweilige Gehäuseöffnung 105, 105-1, 105-2, 105-3, 105-4 wird jeweils durch einen Öffnungsrand 109 des Ventilgehäuses 101 begrenzt, wobei in der Fig. 1 auch lediglich der für dritte Gehäuseöffnung 105-3 dargestellte Öffnungsrand 109 mit einem Bezugszeichen markiert ist.

Die Fluidverteilungsanordnung 100 umfasst ferner einen Ventilkolben 111, welcher drehbar in dem Gehäuseinnenraum 103 angeordnet und ausgebildet ist, in Abhängigkeit einer Kolbenstellung die zumindest drei, insbesondere vier, Gehäuseöffnungen 105, 105-1, 105-2, 105-3, 105-4 zumindest teilweise fluidtechnisch zu sperren oder zumindest teilweise fluidtechnisch freizugeben.

In der in der Fig. 1 dargestellten Ausführungsform weist der Ventilkolben 111 eine optionale Halbschalen-förmige Struktur auf, welche in der in Fig. 1 gezeigten Kolbenstellung in der Lage ist, die dritte und vierte Gehäuseöffnungen 105, 105-3, 105-4 fluidtechnisch zu sperren, und die erste und zweite Gehäuseöffnungen 105, 105-1, 105-2 fluidtechnisch freizugeben. Alternativ kann der Ventilkolben 111 auch für ein 2/2-Wegeventil mit zwei gegenläufigen 90° Kanälen ausgebildet sein.

Natürlich ist der Ventilkolben 111 drehbar, so dass in der in der Fig. 1 dargestellten Ausführungsform vier Kolbenstellungen möglich sind, welche jeweils durch eine Rotation um 90° ineinander überführbar sind. In jeder dieser Kolbenstellungen des Ventilkolbens 111 sind jeweils zwei benachbarte Gehäuseöffnungen 105, 105-1, 105-2, 105-3, 105-4 fluidtechnisch gesperrt, und die jeweils gegenüberliegenden beiden benachbarten Gehäuseöffnungen 105, 105-1, 105-2, 105-3, 105-4 werden fluidtechnisch freigegeben.

Natürlich ist der Ventilkolben 111 nicht auf die in Fig. 1 dargestellte Geometrie begrenzt, sondern kann beispielsweise auch einen geraden Fluidkanal umfassen, wobei in diesem Fall in Abhängigkeit der Kolbenstellung jeweils die gegenüberliegenden Gehäuseöffnungen 105-1 und 105-3 oder 105-2 und 105-4 miteinander fluidtechnisch verbunden sind.

In einer alternativen in der Fig. 1 nicht dargestellten Geometrie weist der Ventilkolben 111 zwei gegenüberliegende, jeweils um 90° abgeknickte Kanäle auf, so dass in diesem Fall durch den Ventilkolben jeweils zwei benachbarte Gehäuseöffnungen 105, 105-1, 105-2, 105-3, 105-4 fluidtechnisch freigegeben sind, und die jeweils gegenüberliegenden beiden benachbarten Gehäuseöffnungen 105, 105-1, 105-2, 105-3, 105-4 fluidtechnisch gesperrt sind.

Ferner weist das Ventilgehäuse 101 in einer Oberseite eine Kolbenöffnung 113 auf, durch welche der Ventilkolben 111 in den Gehäuseinnenraum 103 des Ventilgehäuses 101 eingeführt werden kann. Die Kolbenöffnung 113 wird durch einen Gehäusedeckel 115 der Fluidverteilungsanordnung 100 verschlossen. In dem Gehäusedeckel 115 ist eine Deckelöffnung 116 geformt, durch welche die Ventilwelle 111-1 des Ventilkolbens 111 geführt ist, und welche durch einen in Fig. 1 nicht dargestellten Ventilmotor bewegt wird.

Wie aus der Fig. 1 ferner hervorgeht, ist sowohl das Ventilgehäuse 101 als auch der Gehäusedeckel 115 im Bereich der Fluidführungen 107 jeweils als eine Halbschale geformt, welche miteinander verbunden, insbesondere stoffschlüssig verbunden werden. Das Ventilgehäuse 101 bildet hier im Bereich der Fluidführungen 107 eine untere Halbschale, und das Gehäusedeckel 115 bildet hierbei im Bereich der Fluidführungen 107 eine obere Halbschale, welche zusammen die jeweilige Fluidführung 107 fluiddicht begrenzen. Somit schließt der Gehäusedeckel 115, insbesondere eine obere Fluidwandungskontur 106 des Gehäusedeckels 115, die offene Fluidführungsoberseite 108 der Fluidführungen 107 des Ventilgehäuses 101 fluiddicht ab.

Zur fluidtechnischen Abdichtung weist die Fluidverteilungsanordnung 100 ferner zumindest drei, insbesondere vier, Dichtungsanordnungen 117, 117-1, 117-2, 117-3, 117-4 auf, wobei jeweils eine der zumindest drei, insbesondere vier, Dichtungsanordnungen 117, 117-1, 117-2, 117-3, 117-4 an jeweils einer der zumindest drei, insbesondere vier, Gehäuseöffnungen 105, 105-1, 105-2, 105-3, 105-4 angeordnet ist, und zwar innerhalb der jeweiligen Fluidführung 107, 107-1, 107-2, 107-3, 107-4.

Insbesondere ist eine erste Dichtungsanordnung 117-1 innerhalb der ersten Fluidführung 107-1 an der ersten Gehäuseöffnung 105-1 angeordnet. Insbesondere ist eine zweite Dichtungsanordnung 117-2 innerhalb der zweiten Fluidführung 107-2 an der zweiten Gehäuseöffnung 105-2 angeordnet. Insbesondere ist eine dritte Dichtungsanordnung 117-3 innerhalb der dritten Fluidführung 107-3 an der dritten Gehäuseöffnung 105-3 angeordnet. Insbesondere ist eine vierte Dichtungsanordnung 117-4 innerhalb der vierten Fluidführung 107-4 an der vierten Gehäuseöffnung 105-4 angeordnet.

Die Dichtungsanordnungen 117 umfassen jeweils ein Befestigungselement 119 und ein Dichtungselement 121.

Auch wenn das aufgrund der Explosionsdarstellung der Fig. 1 nicht dargestellt ist, liegt das jeweilige Befestigungselement 119 der jeweiligen Dichtungsanordnung 117 an einer Innenwand 123 der jeweiligen Fluidführung 107 an und ist ausgebildet, das jeweilige Dichtungselement 121 der jeweiligen Dichtungsanordnung 117 mit einer Kraft zu beaufschlagen, um das jeweilige Dichtungselement 121 an den jeweiligen Öffnungsrand 109 des Ventilgehäuses 101 zu pressen, und eine fluidtechnische Abdichtung zwischen dem Ventilkolben 111 und dem jeweiligen Öffnungsrand 109 zu bewirken.

Aus Übersichtlichkeitsgründen sind in der Fig. 1 nicht alle vier Dichtungsanordnungen 117 und Innenwände 123 von allen Fluidführungen 107 durch Bezugszeichen gekennzeichnet.

Durch die Abstützung des jeweiligen Befestigungselements 119 an der jeweiligen Innenwand 123 der jeweiligen Fluidführung 107 wird ein Anpressdruck auf das jeweilige Dichtungselement 121 dahingehend ausgeübt, dass das jeweilige Dichtungselement 121 wirksam an den jeweiligen Öffnungsrand 109 angepresst wird, so dass eine wirksame fluidtechnische Abdichtung zwischen dem Ventilkolben 111 und dem jeweiligen Öffnungsrand 109 des Ventilgehäuses 101 bewirkt wird.

Somit stellen die Dichtungsanordnungen 117 in Abhängigkeit von der Kolbenstellung des Ventilkolbens 111 eine fluidtechnische Abdichtung für die Gehäuseöffnungen 105 des Ventilgehäuses 101 sicher.

Für weitere Details zu der entsprechenden fluidtechnischen Abdichtung für die Gehäuseöffnungen 105 durch die Dichtungsanordnungen 117 wird auf die nachfolgenden Figuren verwiesen.

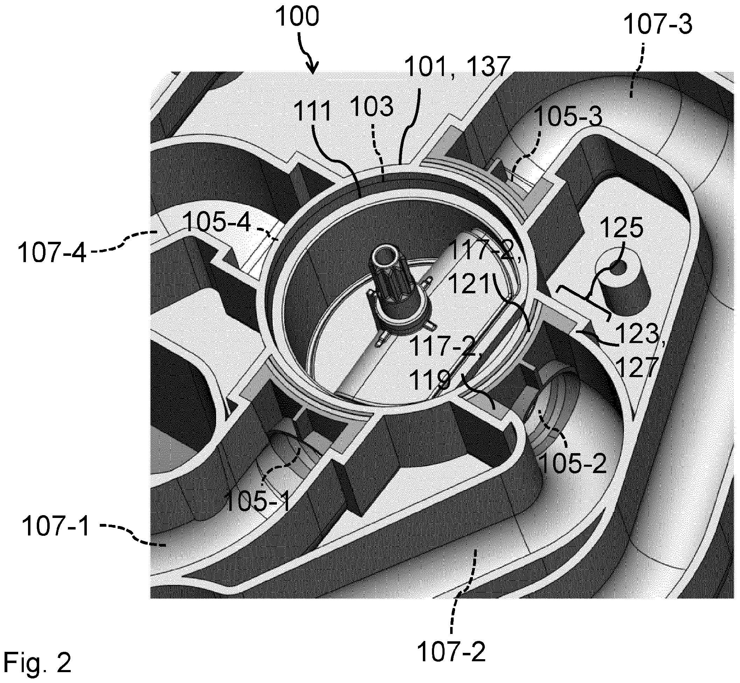

Fig. 2 zeigt eine perspektivische Ansicht eines Ausschnittes einer Fluidverteilungsanordnung gemäß einer Ausführungsform in einer Schnittdarstellung.

Die in der Fig. 2 dargestellte Fluidverteilungsanordnung 100 unterscheidet sich von der in der Fig. 1 dargestellten Fluidverteilungsanordnung 100 dadurch, dass die in der Fig. 1 vorhandene als Fluidstutzen ausgebildete vierte Fluidleitung 107-4 analog zu der ersten, zweiten und dritten Fluidleitung 107-1, 107-2, und 107-3 auch als Fluidkanal ausgebildet ist, und dass die Fluidleitungen 107 abgebogene Geometrien mit teilweise engen Kurvenradien aufweisen.

In der in Fig. 2 dargestellten Ausführungsform ist eine Schnittdarstellung ohne die Darstellung des Gehäusedeckels 115 gewählt, so dass das Ventilgehäuse 101 oben geöffnet ist, und ein Einblick in den Gehäuseinnenraum 103 ermöglicht wird.

Für die weiteren Ausführungen wird auf die Fig. 1 verwiesen.

Aus der in Fig. 2 gezeigten Kolbenstellung des Ventilkolbens 111 geht hervor, dass der Ventilkolben 111 die vierte Gehäuseöffnung 105-4 zwischen der vierten Fluidführung 107-4 und dem Gehäuseinnenraum 103 fluidtechnisch sperrt, und dass der Ventilkolben 111 die erste, zweite und dritte Gehäuseöffnung 105-1, 105-2, 105-3 fluidtechnisch freigibt, so dass Fluid zwischen der ersten, zweiten und dritten Fluidführung 107-1, 107-2, 107-3 ausgetauscht werden kann.

Wie bereits in Bezug auf die Fig. 1 erwähnt wurde, umfasst die jeweilige Dichtungsanordnung 117 jeweils ein Befestigungselement 119 und ein Dichtungselement 121.

Das jeweilige Befestigungselement 119 der jeweiligen Dichtungsanordnung 117 liegt an einer Innenwand 123 der jeweiligen Fluidführung 107 an und ist ausgebildet, das jeweilige Dichtungselement 121 der jeweiligen Dichtungsanordnung 117 mit einer Kraft zu beaufschlagen, um das jeweilige Dichtungselement 121 an den jeweiligen Öffnungsrand 109 des Ventilgehäuses 101 zu pressen und eine fluidtechnische Abdichtung zwischen dem Ventilkolben 111 und dem jeweiligen Öffnungsrand 109 zu bewirken.

Hierbei ist in der Fig. 2 ersichtlich, dass die jeweilige Dichtungsanordnung 117 in einem Dichtungsaufnahmebereich 125 der jeweiligen Fluidführung 107 aufgenommen ist. Der jeweilige Dichtungsaufnahmebereich 125 ist auf der dem Gehäuseinnenraum 103 zugewandten Seite begrenzt durch die jeweilige Gehäuseöffnung 105, und der jeweilige Dichtungsaufnahmebereich 125 ist auf der dem Gehäuseinnenraum 103 abgewandten Seite begrenzt durch die Innenwand 123 der jeweiligen Fluidführung 107, insbesondere durch einen Vorsprung 127 der Innenwand 123.

Das jeweilige Befestigungselement 119 der jeweiligen Dichtungsanordnung 117 liegt hierbei an dem Vorsprung 127 der Innenwand 123 der jeweiligen Fluidführung 107 an und presst dadurch das jeweilige Dichtungselement 121 der jeweiligen Dichtungsanordnung 117 an den jeweiligen Öffnungsrand 109 der jeweiligen Gehäuseöffnung 105.

Wie in der Fig. 2 ferner dargestellt ist und in Bezug auf die weiteren Figuren näher erläutert wird, ist das jeweilige Dichtungselement 121 insbesondere als ein Zweikomponentenbauteil ausgeführt.

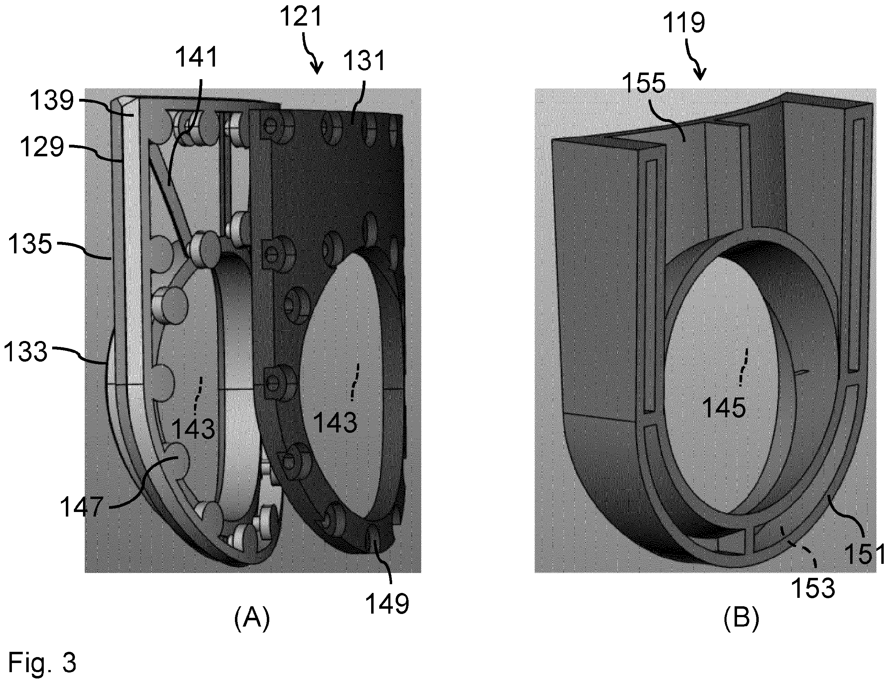

Die Figuren 3A, 3B zeigen perspektivische Ansichten eines Dichtungselements und eines Befestigungselements jeweils einer Dichtungsanordnung gemäß der in Fig. 1 und Fig. 2 dargestellten Ausführungsform.

Wie bereits in Bezug auf die Fig. 2 ausgeführt wurde, kann das Dichtungselement 121 der Dichtungsanordnung 117 optional als ein Zweikomponentenbauteil geformt sein, umfassend ein verformbares erstes Dichtungselementbauteil 129, welches an dem jeweiligen Öffnungsrand 109 der jeweiligen Gehäuseöffnung 105 des Ventilgehäuses 101 anliegt, und umfassend ein nicht verformbares zweites Dichtungselementbauteil 131, welches an dem jeweiligen Befestigungselement 119 der jeweiligen Dichtungsanordnung 117 anliegt.

Die verformbaren, insbesondere elastisch verformbaren Materialeigenschaften des ersten Dichtungselementbauteils 129 des Dichtungselements 121 stellen ein hervorragendes dichtendes Anliegen an der jeweiligen Gehäuseöffnung 105 sicher. Die festen Materialeigenschaften des zweiten Dichtungselementbauteils 131 stellen eine hervorragende Kraftübertragung von dem Befestigungselement 119 auf das erste Dichtungselementbauteil 129 des Dichtungselements 121 sicher.

Aus der Fig. 3A geht hervor, dass das jeweilige Dichtungselement 121 der jeweiligen Dichtungsanordnung 117, insbesondere das erste Dichtungselementbauteil 129, an einer der Gehäuseöffnung 105 des Ventilgehäuses 101 zugewandten Seite eine umlaufende Dichtungslippe 133 aufweist, welche sich von dem jeweiligen Öffnungsrand 109 des Ventilgehäuses 101 in die jeweilige Gehäuseöffnung 105 erstreckt.

Aus der Fig. 3A geht ferner hervor, dass das jeweilige Dichtungselement 121 der jeweiligen Dichtungsanordnung 117, insbesondere das erste Dichtungselementbauteil 129, einen Anlegebereich 135 aufweist, welcher ausgebildet ist, an einer der jeweiligen Fluidführung 107 zugewandten Außenwandung 137 des Ventilgehäuses 101 anzuliegen, wobei der jeweilige Anlegebereich 135 insbesondere einstückig mit der jeweiligen Dichtungslippe 133 geformt ist.

Wie aus der Fig. 3A ferner zu entnehmen ist, umfasst der Anlegebereich 135 insbesondere einen umlaufenden Rahmen 139, welcher durch eine Mehrzahl von Stegen 141 stabilisiert ist.

Ferner weist das in der Fig. 3A dargestellte jeweilige Dichtungselement 121 der jeweiligen Dichtungsanordnung 117, insbesondere das erste Dichtungselementbauteil 129 und das zweite Dichtungselementbauteil 131, eine erste Dichtungsöffnung 143 auf, welche fluchtend zu der jeweiligen Gehäuseöffnung 105 des Ventilgehäuses 101 angeordnet ist, und weist das in der Fig. 3B dargestellte jeweilige Befestigungselement 119 der jeweiligen Dichtungsanordnung 117 eine zweite Dichtungsöffnung 145 auf, welche fluchtend zu der jeweiligen Gehäuseöffnung 105 des Ventilgehäuses 101 und der ersten Dichtungsöffnung 143 des jeweiligen Dichtungselements 121 angeordnet ist. Somit wird ein wirksamer Fluidstrom durch die Gehäuseöffnung 105 und durch die Dichtungsanordnung 117 gewährleistet.

Aus der Fig. 3A ist ferner zu erkennen, dass das erste Dichtungselementbauteil 129 insbesondere eine Vielzahl von Formnoppen 147 aufweist, welche ausgebildet sind, in entsprechende Formnoppenaufnahmen 149 des zweiten Dichtungselementbauteils 131 einzugreifen, um das erste Dichtungselementbauteil 129 und das zweite Dichtungselementbauteil 131 formschlüssig miteinander zu verbinden.

In der Fig. 3B ist ferner zu erkennen, dass das jeweilige Befestigungselement 119 der jeweiligen Dichtungsanordnung 117, 117-1, 117-2, 117-3, 117-4 an einer der jeweiligen Gehäuseöffnung 105 abgewandten Seite einen zumindest abschnittsweise umlaufenden Kontaktsteg 151 aufweist, welcher an der Innenwand 123, insbesondere dem Vorsprung 127 der jeweiligen Fluidführung 107 anliegt.

Der zumindest abschnittsweise umlaufende Kontaktsteg 151 stellt hierbei sicher, dass eine wirksame Kraftübertragung zwischen der Innenwand 123 der jeweiligen Fluidführung 107 auf das Dichtungselement 121 erfolgt. Insbesondere kann der Kontaktsteg 151 Aussparungen 153 aufweisen.

Aus der Fig. 3B ist ferner zu entnehmen, dass das jeweilige Befestigungselement 119 der jeweiligen Dichtungsanordnung 117 einen Kontaktbereich 155 aufweist, welcher an dem jeweiligen Dichtungselement 121, insbesondere an dem zweiten Dichtungselementbauteil 131, der jeweiligen Dichtungsanordnung 117 anliegt.

Wie aus der Fig. 3A und 3B ferner zu entnehmen ist, weisen das Dichtungselement 121, insbesondere das erste und zweite Dichtungselementbauteil 131, sowie das Befestigungselement 119 der jeweiligen Dichtungsanordnung 117 insbesondere eine U-Form auf.

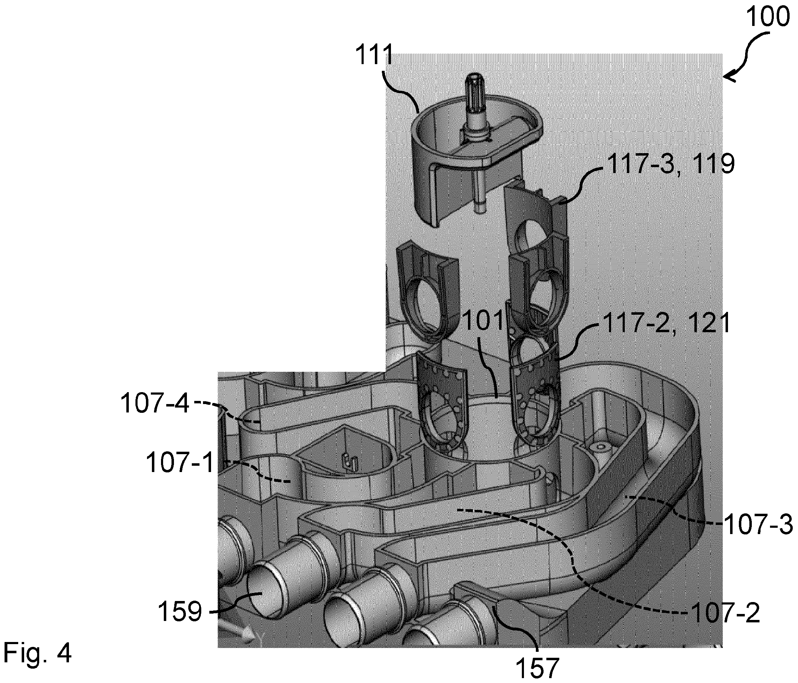

Fig. 4 zeigt eine perspektivische Ansicht eines vergrößerten Ausschnittes der in Fig. 2 dargestellten Fluidverteilungsanordnung gemäß einer Ausführungsform in einer Schnittdarstellung.

Aus dem vergrößerten Ausschnitt der in Fig. 4 dargestellten Fluidverteilungsanordnung 100 ist ersichtlich, dass die Fluidführungen 107 komplexe Führungsgeometrien aufweisen, um eine kompakte Anordnung der Fluidführungen 107 in der entsprechenden Fluidverteilungsanordnung 100, bzw. Fluidverteilerplatte zu erreichen.

So erstrecken sich die vier Fluidführungen 107 von der jeweiligen Gehäuseöffnung 105 des Ventilgehäuses 101 aus unmittelbar in entgegengesetzte Richtungen, was bedeutet, dass sich an der jeweiligen Gehäuseöffnung 105 die in der Fig. 4 nicht gezeigten Erstreckungsachsen jeweils benachbarter Fluidführungen in einem Winkel von 90° schneiden.

Im weiteren Verlauf sind die Fluidführungen 107 jedoch als gebogene Fluidführungen 107 ausgebildet, welche sich von der jeweiligen Gehäuseöffnung 105 des Ventilgehäuses 101 in Richtung einer gemeinsamen Verteilervorderseite 157 der Fluidverteilungsanordnung 100 erstrecken.

An der Verteilervorderseite 157 der Fluidverteilungsanordnung 100 ist eine Mehrzahl von nebeneinander angeordneten Fluidstutzen 159 vorhanden, wobei jeweils einer der Fluidstutzen 159 zur fluidtechnischen Verbindung mit jeweils einer der Fluidführungen 107 ausgebildet ist.

Somit kann eine vorteilhafte fluidtechnische Anbindung der Fluidverteilungsanordnung 100 erreicht werden.

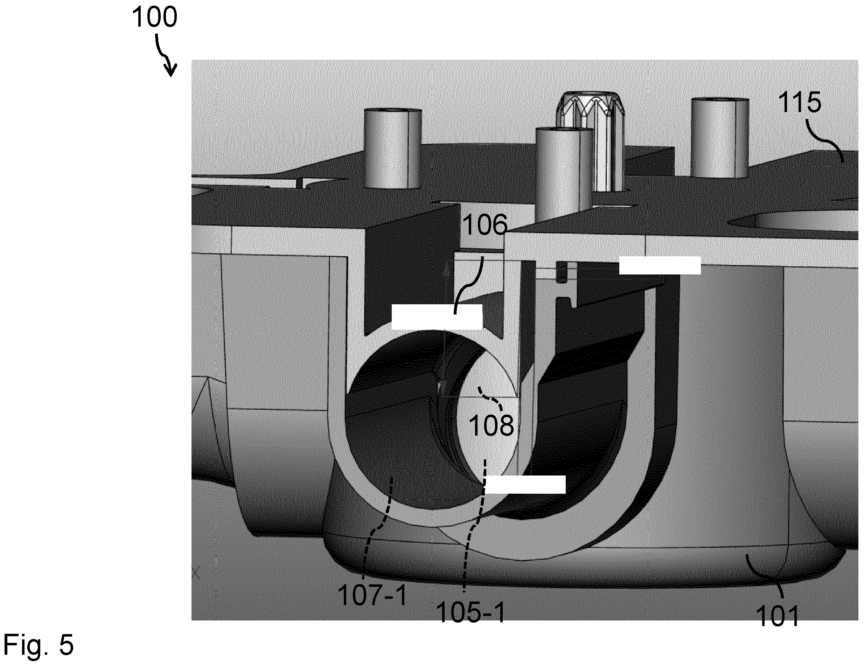

Fig. 5 zeigt eine perspektivische seitliche Ansicht eines Ausschnittes einer Fluidverteilungsanordnung gemäß einer Ausführungsform.

Analog zur Fig. 1 zeigt auch die Darstellung gemäß der Fig. 5, dass die Fluidverteilungsanordnung 100 ein Ventilgehäuse 101 aufweist, welches durch einen Gehäusedeckel 115 fluiddicht verschlossen wird.

Aus der Fig. 5 gut zu entnehmen ist, dass sowohl das Ventilgehäuse 101 als auch der Gehäusedeckel 115 im Bereich der Fluidführungen 107 jeweils als eine Halbschale geformt sind, welche miteinander verbunden, insbesondere stoffschlüssig verbunden werden. Somit schließt der Gehäusedeckel 115, insbesondere eine obere Fluidwandungskontur 106 des Gehäusedeckels 115, die offene Fluidführungsoberseite 108 der Fluidführungen 107 des Ventilgehäuses 101 fluiddicht ab.

Um eine wirksame fluiddichte Verbindung zwischen dem Ventilgehäuse 101 und dem Gehäusedeckel 115 zu erreichen, werden beide Bauteile insbesondere miteinander verschweißt, insbesondere mittels Laserschweißen oder mittels Heißgas-, IR-, Ultraschall-, bzw. Spiegelschweißen.

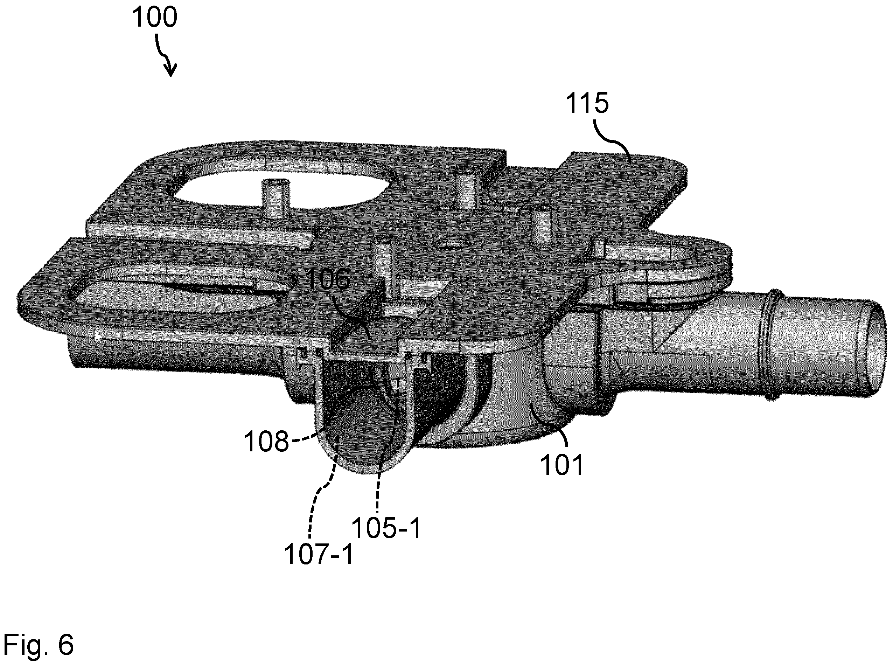

Fig. 6 zeigt eine perspektivische Ansicht der in Fig. 1 dargestellten Fluidverteilungsanordnung im zusammengefügten Zustand.

Auch in der Fig. 6 ist gut zu erkennen, wie der Gehäusedeckel 115 das Ventilgehäuse 101 fluiddicht wirksam nach oben hin abschließt und eine wirksame Führung von Fluid durch die Fluidverteilungsanordnung 100 ermöglicht.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Fluidverteilungsanordnung
- 101: Ventilgehäuse
- 103: Gehäuseinnenraum
- 105: Gehäuseöffnung
- 105-1: Erste Gehäuseöffnung
- 105-2: Zweite Gehäuseöffnung
- 105-3: Dritte Gehäuseöffnung
- 105-4: Vierte Gehäuseöffnung
- 106: Obere Fluidwandungskontur
- 107: Fluidführung
- 107-1: Erste Fluidführung
- 107-2: Zweite Fluidführung
- 107-3: Dritte Fluidführung
- 107-4: Vierte Fluidführung
- 108: Offene Fluidführungsoberseite
- 109: Öffnungsrand
- 111: Ventilkolben
- 113: Kolbenöffnung
- 115: Gehäusedeckel
- 116: Deckelöffnung
- 117: Dichtungsanordnung
- 117-1: Erste Dichtungsanordnung
- 117-2: Zweite Dichtungsanordnung
- 117-3: Dritte Dichtungsanordnung
- 117-4: Vierte Dichtungsanordnung
- 119: Befestigungselement
- 121: Dichtungselement
- 123: Innenwand der Fluidführung
- 125: Dichtungselementaufnahmebereich
- 127: Vorsprung der Innenwand der Fluidführung
- 129: Erstes Dichtungselementbauteil
- 131: Zweites Dichtungselementbauteil
- 133: Umlaufende Dichtungslippe
- 135: Anlegebereich
- 137: Außenwandung des Ventilgehäuses
- 139: Umlaufender Rahmen
- 141: Steg
- 143: Erste Dichtungsöffnung
- 145: Zweite Dichtungsöffnung
- 147: Formnoppen
- 149: Formnoppenaufnahme
- 151: Kontaktsteg
- 153: Aussparung
- 155: Kontaktbereich
- 157: Verteilervorderseite
- 159: Fluidstutzen

## Patentansprüche

1. Fluidverteilungsanordnung (100), umfassend:
zumindest drei Fluidführungen (107, 107-1, 107-2, 107-3, 107-4), welche ausgebildet sind, Fluid zu führen, wobei die zumindest drei Fluidführungen (107, 107-1, 107-2, 107-3, 107-4) in einem Ventilgehäuse (101) der Fluidverteilungsanordnung (100) geformt sind,
ein Ventilgehäuse (101), welches einen Gehäuseinnenraum (103) begrenzt, wobei das Ventilgehäuse (101) zumindest drei Gehäuseöffnungen (105, 105-1, 105-2, 105-3, 105-4) aufweist, welche jeweils den Gehäuseinnenraum (103) mit einer Fluidführung (107, 107-1, 107-2, 107-3, 107-4) der zumindest drei Fluidführungen (107, 107-1, 107-2, 107-3, 107-4) fluidtechnisch verbinden, wobei die jeweilige Gehäuseöffnung (105, 105-1, 105-2, 105-3, 105-4) jeweils durch einen Öffnungsrand (109) des Ventilgehäuses (101) begrenzt wird,
einen Ventilkolben (111), welcher drehbar in dem Gehäuseinnenraum (103) angeordnet und ausgebildet ist, die zumindest drei Gehäuseöffnungen (105, 105-1, 105-2, 105-3, 105-4) in Abhängigkeit einer Kolbenstellung des Ventilkolbens (111) zumindest teilweise fluidtechnisch zu sperren oder zumindest teilweise fluidtechnisch freizugeben,
zumindest drei Dichtungsanordnungen (117, 117-1, 117-2, 117-3, 117-4), wobei jeweils eine der zumindest drei Dichtungsanordnungen (117, 117-1, 117-2, 117-3, 117-4) in jeweils einer der zumindest drei Fluidführungen (107, 107-1, 107-2, 107-3, 107-4) an jeweils einer der zumindest drei Gehäuseöffnungen (105, 105-1, 105-2, 105-3, 105-4) angeordnet ist,
wobei die Dichtungsanordnungen (117, 117-1, 117-2, 117-3, 117-4) jeweils ein Befestigungselement (119) und ein Dichtungselement (121) aufweisen,
wobei das jeweilige Befestigungselement (119) an einer Innenwand (123) der jeweiligen Fluidführung (107, 107-1, 107-2, 107-3, 107-4) anliegt und ausgebildet ist, das jeweilige Dichtungselement (121) mit einer Kraft zu beaufschlagen, um das jeweilige Dichtungselement (121) an den jeweiligen Öffnungsrand (109) des Ventilgehäuses (101) zu pressen und eine fluidtechnische Abdichtung zwischen dem Ventilkolben (111) und dem jeweiligen Öffnungsrand (109) zu bewirken.

2. Fluidverteilungsanordnung (100) nach Anspruch 1, wobei die Fluidverteilungsanordnung (100) einen Gehäusedeckel (115) aufweist, welcher mit dem Ventilgehäuse (101) fluiddicht, insbesondere stoffschlüssig verbunden ist.

3. Fluidverteilungsanordnung (100) nach Anspruch 2, wobei die in dem Ventilgehäuse (101) geformten Fluidführungen (107, 107-1, 107-2, 107-3, 107-4) jeweils eine offene Fluidführungsoberseite (108) aufweisen, welche durch jeweils eine obere Fluidwandungskontur (106) des Gehäusedeckels (115) fluiddicht verschlossen wird.

4. Fluidverteilungsanordnung (100) nach einem der vorangehenden Ansprüche, wobei die zumindest drei Fluidführungen (107, 107-1, 107-2, 107-3, 107-4) einstückig in dem Ventilgehäuse (101) geformt sind.

5. Fluidverteilungsanordnung (100) nach einem der vorangehenden Ansprüche, wobei die zumindest drei Fluidführungen (107, 107-1, 107-2, 107-3, 107-4) jeweils einen Dichtungsaufnahmebereich (125) aufweisen, welcher ausgebildet ist, die jeweilige Dichtungsanordnung (117, 117-1, 117-2, 117-3, 117-4) aufzunehmen, wobei der jeweilige Dichtungsaufnahmebereich (125) durch die jeweilige Gehäuseöffnung (105, 105-1, 105-2, 105-3, 105-4) begrenzt ist, wobei der jeweilige Dichtungsaufnahmebereich (125) durch einen Vorsprung (127) einer Innenwand (123) der jeweiligen Fluidführung (107, 107-1, 107-2, 107-3, 107-4) begrenzt ist, wobei das jeweilige Dichtungselement (121) der jeweiligen Dichtungsanordnung (117, 117-1, 117-2, 117-3, 117-4) an der jeweiligen Gehäuseöffnung (105, 105-1, 105-2, 105-3, 105-4) anliegt, und wobei das jeweilige Befestigungselement (119) an dem Vorsprung (127) anliegt.

6. Fluidverteilungsanordnung (100) nach einem der vorangehenden Ansprüche, wobei das jeweilige Dichtungselement (121) der jeweiligen Dichtungsanordnung (117, 117-1, 117-2, 117-3, 117-4) als ein Zweikomponentenbauteil geformt ist, umfassend ein erstes Dichtungselementbauteil (129), welches an dem jeweiligen Öffnungsrand (109) der jeweiligen Gehäuseöffnung (105, 105-1, 105-2, 105-3, 105-4) des Ventilgehäuses (101) anliegt, und umfassend ein zweites Dichtungselementbauteil (131), welches an dem jeweiligen Befestigungselement (119) der jeweiligen Dichtungsanordnung (117, 117-1, 117-2, 117-3, 117-4) anliegt.

7. Fluidverteilungsanordnung (100) nach Anspruch 6, wobei das erste Dichtungselementbauteil (129) einen elastisch verformbaren Kunststoff, insbesondere ein Elastomer, aufweist, und/oder wobei das zweite Dichtungselementbauteil (131) festen Kunststoff, insbesondere ein Thermoplast, aufweist.

8. Fluidverteilungsanordnung (100) nach einem der Ansprüche 1 bis 5, wobei das jeweilige Dichtungselement (121) der jeweiligen Dichtungsanordnung (117, 117-1, 117-2, 117-3, 117-4) als ein einstückiges, insbesondere materialeinheitliches, Bauteil geformt ist.

9. Fluidverteilungsanordnung (100) nach einem der vorangehenden Ansprüche, wobei das jeweilige Dichtungselement (121) der jeweiligen Dichtungsanordnung (117, 117-1, 117-2, 117-3, 117-4), insbesondere das erste Dichtungselementbauteil (129), an einer der Gehäuseöffnung (105, 105-1, 105-2, 105-3, 105-4) des Ventilgehäuses (101) zugewandten Seite eine umlaufende Dichtungslippe (133) aufweist, welche sich von dem jeweiligen Öffnungsrand (109) des Ventilgehäuses (101) in die jeweilige Gehäuseöffnung (105, 105-1, 105-2, 105-3, 105-4) erstreckt.

10. Fluidverteilungsanordnung (100) nach einem der vorangehenden Ansprüche, wobei das jeweilige Dichtungselement (121) der jeweiligen Dichtungsanordnung (117, 117-1, 117-2, 117-3, 117-4), insbesondere das erste Dichtungselementbauteil (129), einen Anlegebereich (135) aufweist, welcher ausgebildet ist, an einer der jeweiligen Fluidführung (107, 107-1, 107-2, 107-3, 107-4) zugewandten Außenwandung (137) des Ventilgehäuses (101) anzuliegen, wobei der jeweilige Anlegebereich (135) insbesondere einstückig mit der jeweiligen Dichtungslippe (133) geformt ist.

11. Fluidverteilungsanordnung (100) nach einem der vorangehenden Ansprüche, wobei das jeweilige Dichtungselement (121) der jeweiligen Dichtungsanordnung (117, 117-1, 117-2, 117-3, 117-4) , insbesondere das erste und zweite Dichtungselementbauteil (129, 131), eine erste Dichtungsöffnung (143) aufweist, welche fluchtend zu der jeweiligen Gehäuseöffnung (105, 105-1, 105-2, 105-3, 105-4) des Ventilgehäuses (101) angeordnet ist, und wobei das jeweilige Befestigungselement (119) der jeweiligen Dichtungsanordnung (117, 117-1, 117-2, 117-3, 117-4) eine zweite Dichtungsöffnung (145) aufweist, welche fluchtend zu der jeweiligen Gehäuseöffnung (105, 105-1, 105-2, 105-3, 105-4) des Ventilgehäuses (101) und der ersten Dichtungsöffnung (143) des jeweiligen Dichtungselements (121) angeordnet ist.

12. Fluidverteilungsanordnung (100) nach einem der vorangehenden Ansprüche, wobei das jeweilige Befestigungselement (119) der jeweiligen Dichtungsanordnung (117, 117-1, 117-2, 117-3, 117-4) an einer der jeweiligen Gehäuseöffnung (105, 105-1, 105-2, 105-3, 105-4) abgewandten Seite einen zumindest abschnittsweise umlaufenden Kontaktsteg (151) aufweist, welcher an der Innenwand (123), insbesondere dem Vorsprung (127) der Fluidführung (107, 107-1, 107-2, 107-3, 107-4) der jeweiligen Fluidführung (107, 107-1, 107-2, 107-3, 107-4) anliegt.

13. Fluidverteilungsanordnung (100) nach einem der vorangehenden Ansprüche, wobei das jeweilige Befestigungselement (119) der jeweiligen Dichtungsanordnung (117, 117-1, 117-2, 117-3, 117-4) einen Kontaktbereich (155) aufweist, welcher an dem jeweiligen Dichtungselement (121), insbesondere dem jeweiligen Anlegebereich (135), der jeweiligen Dichtungsanordnung (117, 117-1, 117-2, 117-3, 117-4) anliegt.

14. Fluidverteilungsanordnung (100) nach einem der vorangehenden Ansprüche, wobei sich die zumindest drei Fluidführungen (107, 107-1, 107-2, 107-3, 107-4) der Fluidverteilungsanordnung (100) von der jeweiligen Gehäuseöffnung (105, 105-1, 105-2, 105-3, 105-4) des Ventilgehäuses (101) aus in entgegengesetzte Richtungen erstrecken.

15. Fluidverteilungsanordnung (100) nach einem der vorangehenden Ansprüche, wobei die zumindest drei Fluidführungen (107, 107-1, 107-2, 107-3, 107-4) der Fluidverteilungsanordnung (100) als gebogene Fluidführungen (107, 107-1, 107-2, 107-3, 107-4) ausgebildet sind, wobei sich die zumindest drei Fluidführungen (107, 107-1, 107-2, 107-3, 107-4) von der jeweiligen Gehäuseöffnung (105, 105-1, 105-2, 105-3, 105-4) des Ventilgehäuses (101) in Richtung einer gemeinsamen Verteilervorderseite (157) der Fluidverteilungsanordnung (100) erstrecken, und wobei insbesondere an der Verteilervorderseite (157) der Fluidverteilungsanordnung (100) eine Mehrzahl von nebeneinander angeordneten Fluidstutzen (159) vorhanden ist, wobei jeweils einer der Fluidstutzen (159) zur fluidtechnischen Verbindung mit jeweils einer der Fluidführungen (107, 107-1, 107-2, 107-3, 107-4) ausgebildet ist.
